# EUROPEAN PATENT APPLICATION

(11) **EP 3 057 162 A1**
(43) Date of publication of application: **17.08.2016**
(21) Application number: 14853018.1
(22) Date of filing: 08.10.2014
(51) Int. Cl.: H01M 8/02, C09J 5/00, C09J 7/02, C09J 11/00, C09J 201/00, H01M 8/10

(54) **PRESSURE-SENSITIVE ADHESIVE SHEET FOR CONVEYING ELECTROLYTE MEMBRANE AND METHOD USING SAID PRESSURE-SENSITIVE ADHESIVE SHEET TO MANUFACTURE FUEL-CELL MEMBRANE ELECTRODE ASSEMBLY**

(30) Priority: 09.10.2013 JP 2013211856
(71) Applicant: Nitto Denko Corporation, Ibaraki-shi, Osaka 567-8680 (JP)
(72) Inventor: NAKANO, Takeshi, Ibaraki-shi Osaka 567-8680 (JP); SATO, Tsukasa, Ibaraki-shi Osaka 567-8680 (JP); MASAKI, Toshiaki, Ibaraki-shi Osaka 567-8680 (JP); NISHII, Hiroyuki, Ibaraki-shi Osaka 567-8680 (JP); MATSUMURA, Takeshi, Ibaraki-shi Osaka 567-8680 (JP); ARIMITSU, Yukio, Ibaraki-shi Osaka 567-8680 (JP)
(74) Representative: Müller-Boré & Partner Patentanwälte PartG mbB
(86) International application number: PCT/JP2014/076911
(87) International publication number: WO 2015/053303

(57) **Abstract**

Provided is a pressure-sensitive adhesive sheet for conveying an electrolyte membrane capable of contributing to improving a handling property at the time of conveyance of a polymer electrolyte membrane, and to preventing deformation of the polymer electrolyte membrane and preventing the occurrence of a wrinkle therein during processing of a membrane electrode assembly (MEA). The pressure-sensitive adhesive sheet for conveying an electrolyte membrane of the present invention includes: a base material; and a pressure-sensitive adhesive layer arranged on one surface or each of both surfaces of the base material, in which the pressure-sensitive adhesive layer has a pressure-sensitive adhesive strength which lowers or disappears through an external stimulus. In one embodiment, the pressure-sensitive adhesive layer contains thermally expandable microspheres.

## Description

### Technical Field

The present invention relates to a pressure-sensitive adhesive sheet for conveying an electrolyte membrane and a manufacturing method for a fuel-cell membrane electrode assembly using the pressure-sensitive adhesive sheet.

### Background Art

A membrane electrode assembly (MEA) serving as a member for a fuel cell is generally a laminate including a polymer electrolyte membrane, a gas diffusion electrode, and the like. There is a demand for manufacture of the membrane electrode assembly having such laminated structure through lamination by a continuous method from the viewpoints of production efficiency, production cost, and the like. As the continuous production method, for example, there are known: a method involving forming a catalyst layer on each of both surfaces of a polymer electrolyte membrane having an elongate shape through application, and laminating a gas diffusion layer on the catalyst layer; a method involving laminating a gas diffusion electrode having a catalyst layer on each of both surfaces of a polymer electrolyte membrane having an elongate shape through pressure bonding; and a method involving forming a catalyst layer on a polymer electrolyte membrane through transfer of the catalyst layer formed on a sheet constituted of polytetrafluoroethylene or the like onto the polymer electrolyte membrane, and laminating a gas diffusion layer on the catalyst layer.

In recent years, for the purpose of output improvement or the like, there has been a demand for thinning of the polymer electrolyte membrane (to, for example, 30 µm or less). However, the thinning of the polymer electrolyte membrane causes problems in that a handling property in continuous production becomes poor and processing precision lowers. In order to eliminate such problems, there is a proposal of a method involving conveying the polymer electrolyte membrane while the polymer electrolyte membrane is temporarily fixed onto a conveyance sheet having a pressure-sensitive adhesive property. According to this method, the conveyance sheet having a pressure-sensitive adhesive property allows the electrolyte membrane to be fixed at the time of its conveyance, and thus the handling property can be improved. However, when the conveyance sheet having a pressure-sensitive adhesive property is used, a tensile stress is applied to the polymer electrolyte membrane after the conveyance (substantially the membrane electrode assembly including the polymer electrolyte membrane) during its peeling from the conveyance sheet. As a result, the polymer electrolyte membrane is deformed (stretched in its lengthwise direction or shrunk or strained in its widthwise direction) or a wrinkle occurs in the polymer electrolyte membrane. Those phenomena become remarkable in high-speed processing, and hence become particularly problematic in mass production or high-speed production.

### Citation List

### Patent Literature

[PTL 1] JP 2006-339062 A

### Summary of Invention

### Technical Problem

The present invention has been made in order to solve the problems of the related art described above, and an object of the present invention is to provide a pressure-sensitive adhesive sheet for conveying an electrolyte membrane capable of contributing to improving a handling property at the time of conveyance of a polymer electrolyte membrane, and to preventing deformation of the polymer electrolyte membrane and preventing the occurrence of a wrinkle therein during processing of a membrane electrode assembly (MEA).

### Solution to Problem

According to one embodiment of the present invention, there is provided a pressure-sensitive adhesive sheet for conveying an electrolyte membrane, including: a base material; and a pressure-sensitive adhesive layer arranged on one surface or each of both surfaces of the base material, in which the pressure-sensitive adhesive layer has a pressure-sensitive adhesive strength which lowers or disappears through an external stimulus.

In one embodiment, the pressure-sensitive adhesive layer contains thermally expandable microspheres.

In one embodiment, the pressure-sensitive adhesive layer is configured to cure through active energy ray irradiation.

According to another embodiment of the present invention, there is provided a manufacturing method for a fuel-cell membrane electrode assembly using the pressure-sensitive adhesive sheet for conveying an electrolyte membrane, the manufacturing method including conveying a polymer electrolyte membrane while the polymer electrolyte membrane is arranged on a pressure-sensitive adhesive surface of the pressure-sensitive adhesive sheet for conveying an electrolyte membrane.

In one embodiment, the pressure-sensitive adhesive sheet for conveying an electrolyte membrane has an elongate shape.

According to still another embodiment of the present invention, there is provided a laminate. The laminate includes: the pressure-sensitive adhesive sheet for conveying an electrolyte membrane; and a polymer electrolyte membrane arranged on the pressure-sensitive adhesive layer of the pressure-sensitive adhesive sheet for conveying an electrolyte membrane.

In one embodiment, the pressure-sensitive adhesive sheet for conveying an electrolyte membrane has an elongate shape.

In one embodiment, the polymer electrolyte membrane has an elongate shape.

In one embodiment, the laminate is formed to be rollable.

### Advantageous Effects of Invention

According to the embodiment of the present invention, by virtue of including the pressure-sensitive adhesive layer having a pressure-sensitive adhesive strength which lowers or disappears through an external stimulus, it is possible to provide the pressure-sensitive adhesive sheet for conveying an electrolyte membrane, which has a sufficient pressure-sensitive adhesive strength during conveyance of an adherend (electrolyte membrane), and is capable of contributing to preventing deformation of the electrolyte membrane and preventing the occurrence of a wrinkle therein through the lowering or disappearance of the pressure-sensitive adhesive strength during peeling of the electrolyte membrane.

### Brief Description of Drawings

FIG. 1 is a schematic sectional view of a pressure-sensitive adhesive sheet for conveying an electrolyte membrane according to one embodiment of the present invention.
FIG. 2 is a schematic perspective sectional view of a laminate according to one embodiment of the present invention.
FIG. 3 is a schematic plan view of a laminate according to one embodiment of the present invention.
FIG. 4 is an explanatory view of an outline of a manufacturing method for a fuel-cell membrane electrode assembly according to a first embodiment of the present invention.
FIG. 5 is an explanatory view of an outline of a manufacturing method for a fuel-cell membrane electrode assembly according to a second embodiment of the present invention.

### Description of Embodiments

### A. Overall Construction of Pressure-sensitive Adhesive Sheet

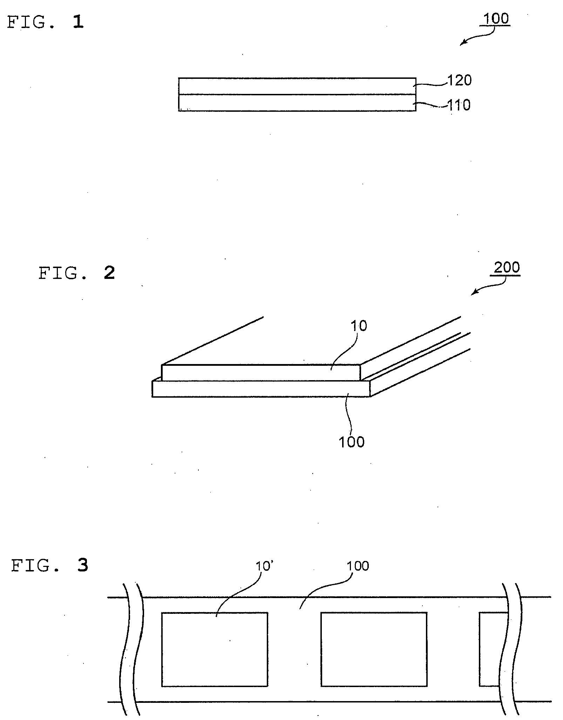

FIG. 1 is a schematic sectional view of a pressure-sensitive adhesive sheet for conveying an electrolyte membrane according to one embodiment of the present invention. A pressure-sensitive adhesive sheet 100 for conveying an electrolyte membrane includes a base material 110 and a pressure-sensitive adhesive layer 120 arranged on one surface or each of both surfaces (in the illustrated example, one surface) of the base material. The pressure-sensitive adhesive layer 120 has a pressure-sensitive adhesive strength which lowers or disappears through an external stimulus. Such pressure-sensitive adhesive layer can exhibit an appropriate pressure-sensitive adhesive property under a situation in which a pressure-sensitive adhesive strength is needed, and can exhibit satisfactorypeelabilityunder a situation in which peeling is needed. The pressure-sensitive adhesive sheet for conveying an electrolyte membrane of the invention of the present application (hereinafter sometimes referred to simply as "pressure-sensitive adhesive sheet") is used, for example, as a conveyance material for conveying an electrolyte membrane in the manufacture of a fuel-cell membrane electrode assembly (MEA), and the pressure-sensitive adhesive sheet contributes to improving a handling property in a step of laminating the electrolyte membrane with other members by fixing and conveying the electrolyte membrane, and then, during peeling of the electrolyte membrane from the pressure-sensitive adhesive sheet, can prevent the electrolyte membrane from being damaged, through the disappearance or lowering of the pressure-sensitive adhesive strength of the pressure-sensitive adhesive layer through an external stimulus. More specifically, during the peeling, the pressure-sensitive adhesive sheet can prevent deformation of the electrolyte membrane (stretching in its lengthwise direction or shrinkage or strain in its widthwise direction) and can prevent the occurrence of a wrinkle in the electrolyte membrane. Further, the pressure-sensitive adhesive sheet of the present invention is excellent in peelability of the electrolyte membrane, and hence can contribute to increasing process speed. It should be noted that the term "external stimulus" as used herein is a generic term for stimuli for lowering a pressure-sensitive adhesive strength, and means, for example, a thermal change (heating or cooling) or irradiation with an active energy ray.

It is preferred that the pressure-sensitive adhesive sheet for conveying an electrolyte membrane of the present invention have an elongate shape. The pressure-sensitive adhesive sheet having an elongate shape can be suitably used in a continuous production process. The length of the pressure-sensitive adhesive sheet of the present invention may be set to any appropriate length depending on a desired production amount and the like.

The pressure-sensitive adhesive sheet of the present invention may further include a protective layer (not shown) for protecting the pressure-sensitive adhesive layer until actual use. The pressure-sensitive adhesive sheet of the present invention may be taken up into a roll shape in a state of being protected by the protective layer. Example of the protective layer include a plastic (such as polyethylene terephthalate (PET), polyethylene, or polypropylene) film, a nonwoven fabric, and paper, each of which is subjected to surface coating with a release agent, such as a silicone-based release agent, a fluorine-based release agent, or a long-chain alkyl acrylate-based release agent.

When the pressure-sensitive adhesive sheet of the present invention is, for example, not protected with the protective layer, its outermost layer on the opposite side to the pressure-sensitive adhesive layer may be subjected to backside treatment. The backside treatment may be performed, for example, using a release agent, such as a silicone-based release agent or a long-chain alkyl acrylate-based release agent. The backside treatment allows the pressure-sensitive adhesive sheet of the present invention to be taken up into a roll shape.

The thickness of the pressure-sensitive adhesive sheet for conveying an electrolyte membrane of the present invention is preferably from 2 µm to 1,000 µm, more preferably from 10 µm to 600 µm. When the thickness falls within such range, workability at the time of peeling of an adherend (electrolyte membrane) is excellent.

The initial pressure-sensitive adhesive strength of the pressure-sensitive adhesive sheet for conveying an electrolyte membrane of the present invention with respect to a polyethylene terephthalate film (PET film) is preferably from 0.3 N/20 mm to 20 N/20 mm, more preferably from 0.5 N/20 mm to 10 N/20 mm. When the initial pressure-sensitive adhesive strength falls within such range, a pressure-sensitive adhesive sheet which allows an electrolyte membrane to be conveyed with a good handling property can be obtained. It should be noted that the initial pressure-sensitive adhesive strength means the pressure-sensitive adhesive strength of the pressure-sensitive adhesive layer before an external stimulus is applied. In addition, the pressure-sensitive adhesive strength refers to apressure-sensitive adhesive strength measured by a method in conformity to JIS Z 0237:2000 (test temperature: 23°C, bonding condition: 1 pass back and forth with 2 kg roller, peel rate: 300 mm/min, peel angle: 180°). For example, a product available under the trade name "Lumirror S10 #25" from Toray Industries, Inc. may be used as the PET film for pressure-sensitive adhesive strength measurement.

The pressure-sensitive adhesive strength of the pressure-sensitive adhesive sheet for conveying an electrolyte membrane of the present invention with respect to the polyethylene terephthalate film (PET film) lowers to preferably 0.5 N/20 mm or less, more preferably 0.3 N/20 mm or less when an external stimulus is applied. Such pressure-sensitive adhesive sheet is excellent in peelability, and the use of the pressure-sensitive adhesive sheet can suppress deformation of an electrolyte membrane and the occurrence of a wrinkle in the electrolyte membrane during peeling of the electrolyte membrane serving as an adherend.

The pressure-sensitive adhesive sheet for conveying an electrolyte membrane of the present invention has a difference between the initial pressure-sensitive adhesive strength and the pressure-sensitive adhesive strength after the lowering of the pressure-sensitive adhesive strength (initial pressure-sensitive adhesive strength - pressure-sensitive adhesive strength after lowering of pressure-sensitive adhesive strength) of preferably from 0.2 N/20 mm to 20 N/20 mm, more preferably from 5 N/20 mm to 20 N/20 mm, still more preferably from 5 N/20 mm to 19.7 N/20 mm, particularly preferably from 5 N/20 mm to 15 N/20 mm, most preferably from 5 N/20 mm to 9.7 N/20 mm. When the difference falls within such range, a balance between a high pressure-sensitive adhesive property at the time of conveyance and a low pressure-sensitive adhesive property at the time of peeling (that is, good peelability) is excellent, and the effects of the present invention become remarkable.

In one embodiment, the pressure-sensitive adhesive sheet for conveying an electrolyte membrane of the present invention may have one or more holes or marks. The presence of a hole or a mark facilitates positioning of a transfer sheet during transfer of a catalyst layer from the transfer sheet as described later, thereby improving mounting precision. It is preferred that the hole or the mark be positioned in the vicinity of each of both ends of the pressure-sensitive adhesive sheet for conveying an electrolyte membrane in its widthwise direction.

### B. Base Material

Examples of the base material include a resin sheet, a nonwoven fabric, paper, metal foil, a woven fabric, a rubber sheet, a foamed sheet, and laminates thereof (in particular, a laminate containing a resin sheet). As constituent resins for the resin sheet, there are given, for example, polyethylene terephthalate (PET), polyethylene naphthalate (PEN), polybutylene terephthalate (PBT), polyethylene (PE), polypropylene (PP), an ethylene-propylene copolymer, an ethylene-vinyl acetate copolymer (EVA), polyamide (nylon), wholly aromatic polyamide (aramid), polyimide (PI), polyvinyl chloride (PVC), polyphenylene sulfide (PPS), a fluorine-based resin, and polyether ether ketone (PEEK). Examples of the nonwoven fabric include: a nonwoven fabric made of natural fibers having heat resistance, such as a nonwoven fabric containing Manila hemp; and synthetic resin nonwoven fabrics, such as a polypropylene resin nonwoven fabric, a polyethylene resin nonwoven fabric, and an ester-based resin nonwoven fabric.

The thickness of the base material may be set to any appropriate thickness depending on, for example, desired strength or flexibility, and intended use. The thickness of the base material is preferably 1,000 µm or less, more preferably from 1 µm to 1,000 µm, still more preferably from 1 µm to 500 µm.

The base material may be subj ected to surface treatment. Examples of the surface treatment include corona treatment, chromic acid treatment, exposure to ozone, exposure to flame, exposure to high voltage electric shock, ionizing radiation treatment, and coating treatment with a primer. Such surface treatment can be performed to enhance adhesiveness between the pressure-sensitive adhesive layer and the base material. In particular, coating treatment with an organic coating material enhances the adhesiveness and hardly causes anchoring failure of the pressure-sensitive adhesive layer at the time of peeling by heating, and hence is preferred.

### C. Pressure-sensitive Adhesive Layer

As described above, the pressure-sensitive adhesive layer included in the pressure-sensitive adhesive sheet for conveying an electrolyte membrane of the present invention has a pressure-sensitive adhesive strength which lowers through an external stimulus.

The thickness of the pressure-sensitive adhesive layer is preferably from 1 µm to 200 µm, more preferably from 5 µm to 100 µm.

The initial surface roughness Ra of the pressure-sensitive adhesive surface of the pressure-sensitive adhesive layer is preferably from 0 µm to 1.0 µm, more preferably from 0 µm to 0.4 µm. When the initial surface roughness Ra falls within such range, a pressure-sensitive adhesive sheet having little unevenness in the pressure-sensitive adhesive surface can be obtained. The use of such pressure-sensitive adhesive sheet can prevent unevenness from being caused in an electrolyte membrane serving as an adherend. In addition, the pressure-sensitive adhesive sheet having little unevenness is particularly useful in the manufacture of a membrane electrode assembly involving laminating members such as a gas diffusion electrode through pressure bonding. It should be noted that the initial surface roughness Ra means the surface roughness Ra of the pressure-sensitive adhesive layer before an external stimulus is applied. The surface roughness Ra may be measured in conformity to JIS B 0601:1994.

### C-1. Pressure-sensitive Adhesive Layer Having Pressure-sensitive Adhesive Strength which Lowers through Heating

In one embodiment, the pressure-sensitive adhesive layer has a pressure-sensitive adhesive strength which lowers or disappears through heating. Examples of such pressure-sensitive adhesive layer include a thermally expandable microsphere-containing pressure-sensitive adhesive layer and a heat-curable pressure-sensitive adhesive layer.

### C-1-1. Thermally Expandable Microsphere-containing Pressure-sensitive Adhesive Layer

The thermally expandable microsphere-containing pressure-sensitive adhesive layer contains a pressure-sensitive adhesive A and thermally expandable microspheres. When the pressure-sensitive adhesive layer is heated, the thermally expandable microspheres expand or foam. As a result, unevenness occurs in the pressure-sensitive adhesive surface and the pressure-sensitive adhesive strength lowers or disappears.

The thickness of the thermally expandable microsphere-containing pressure-sensitive adhesive layer is preferably from 5 µm to 200 µm, more preferably from 10 µm to 150 µm, still more preferably from 15 µm to 100 µm. When the thickness falls within such range, a pressure-sensitive adhesive sheet having a moderate pressure-sensitive adhesive property and being excellent in peelability as well can be obtained.

The tensile elastic modulus of the thermally expandable microsphere-containing pressure-sensitive adhesive layer at 25°C is preferably 0.01 MPa or more, more preferably from 0.05 MPa to 1 MPa, still more preferably from 0.08 MPa to 0.8 MPa. When the tensile elastic modulus falls within such range, a pressure-sensitive adhesive sheet having a moderate pressure-sensitive adhesive property, being excellent in handling property at the time of electrolyte membrane conveyance, and capable of preventing a shift in the position of the electrolyte membrane can be obtained. It should be noted that the tensile elastic modulus may be measured in conformity to JIS K 7161:2008.

The tensile elastic modulus of the thermally expandable microsphere-containing pressure-sensitive adhesive layer at 80°C is preferably 0.01 MPa or more, more preferably from 0.05 MPa to 1 MPa, still more preferably from 0.08 MPa to 0.8 MPa. When the tensile elastic modulus falls within such range, a pressure-sensitive adhesive sheet having excellent workability at the time of peeling can be obtained. In addition, the expansion of the thermally expandable microspheres is not restricted, and hence a pressure-sensitive adhesive sheet excellent in peelability can be obtained.

The pressure-sensitive adhesive layer having such physical characteristics (fracture toughness value and elastic modulus) as described above may be obtained by, for example, appropriately selecting a base polymer constituting the pressure-sensitive adhesive, and adjusting the weight-average molecular weight of the base polymer. When a (meth) acrylic polymer is used as the base polymer of the pressure-sensitive adhesive, the weight-average molecular weight of the polymer is preferably from 50, 000 to 2, 000, 000, more preferably from 100, 000 to 1, 500, 000 . The weight-average molecular weight may be determined by gel permeation chromatography (GPC) measurement (solvent: tetrahydrofuran).

### (Pressure-sensitive Adhesive A)

The pressure-sensitive adhesive A contained in the thermally expandable microsphere-containing pressure-sensitive adhesive layer is preferably one which does not restrict the expansion or foaming of the thermally expandable microspheres at the time of heating. Examples of the pressure-sensitive adhesive include an acrylic pressure-sensitive adhesive, a rubber-based pressure-sensitive adhesive, a vinyl alkyl ether-based pressure-sensitive adhesive, a silicone-based pressure-sensitive adhesive, a polyester-based pressure-sensitive adhesive, a polyamide-based pressure-sensitive adhesive, a urethane-based pressure-sensitive adhesive, a styrene-diene block copolymer-based pressure-sensitive adhesive, a radiation-curable pressure-sensitive adhesive, and a creep property-improved pressure-sensitive adhesive obtained by blending a hot-melt resin having a melting point of about 200°C or less into such pressure-sensitive adhesive (see for example, JP 56-61468 A and JP 63-17981 A). Of those, an acrylic pressure-sensitive adhesive or a rubber-based pressure-sensitive adhesive is preferred. It should be noted that the pressure-sensitive adhesives may be used alone or in combination.

An example of the acrylic pressure-sensitive adhesive is an acrylic pressure-sensitive adhesive whose base polymer is a (meth) acrylic polymer (homopolymer or copolymer) using as a monomer component one kind or two or more kinds of (meth) acrylic acid alkyl esters. An alkyl group of the (meth)acrylic acid alkyl ester is exemplified by preferably linear, branched, or cyclic C1 to C20 alkyl groups, more preferably linear, branched, or cyclic C1 to C10 alkyl groups, particularly preferably a methyl group, an ethyl group, a butyl group, a 2-ethylhexyl group, and an octyl group. The (meth)acrylic polymer may be a homopolymer obtained by using only one kind of (meth) acrylic acid alkyl ester, and may be a copolymer obtained by using two or more kinds of (meth)acrylic acid alkyl esters. It should be noted that the term "(meth) acryl" as used herein is meant to encompass both the terms "acryl" and "methacryl".

The (meth)acrylic polymer may contain a unit corresponding to any other monomer component copolymerizable with the (meth) acrylic acid alkyl ester as required in order to modify cohesive strength, heat resistance, cross-linkability, and the like. Examples of such monomer component include: a carboxyl group-containing monomer, such as acrylic acid or methacrylic acid; an acid anhydride monomer, such as maleic anhydride or itaconic anhydride; a hydroxyl group-containing monomer, such as hydroxyethyl (meth)acrylate or hydroxypropyl (meth)acrylate; a sulfonic group-containing monomer, such as styrenesulfonic acid or allylsulfonic acid; an (N-substituted) amide-based monomer, such as (meth) acrylamide or N,N-dimethyl(meth)acrylamide; an aminoalkyl (meth)acrylate-based monomer, such as aminoethyl (meth)acrylate; an alkoxyalkyl (meth) acrylate-based monomer, such as methoxyethyl (meth)acrylate; a maleimide-based monomer, such as N-cyclohexylmaleimide; an itaconimide-based monomer, such as N-methylitaconimide; a succinimide-based monomer, such as N-(meth)acryloyloxymethylene succinimide; a vinyl-based monomer, such as vinyl acetate, vinyl propionate, or N-vinylpyrrolidone; a cyanoacrylate monomer, such as acrylonitrile or methacrylonitrile; an epoxy group-containing acrylic monomer, such as glycidyl (meth)acrylate; a glycol-based acrylic ester monomer, such as polyethylene glycol (meth)acrylate; an acrylic acid ester-based monomer having a heterocycle, a halogen atom, a silicon atom, or the like, such as tetrahydrofurfuryl (meth)acrylate, a fluoro(meth)acrylate, or a silicone (meth)acrylate; a polyfunctional monomer, such as hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylate, polyester acrylate, or urethane acrylate; an olefin-based monomer, such as isoprene, butadiene, or isobutylene; and a vinyl ether-based monomer, such as vinyl ether. The monomer components may be used alone or in combination.

The (meth) acrylic polymer is obtained by polymerizing one kind or two or more kinds of the monomers. The polymerization may be performed by any method, such as solution polymerization, emulsion polymerization, bulk polymerization, or suspension polymerization.

An example of the rubber-based pressure-sensitive adhesive is a rubber-based pressure-sensitive adhesive whose base polymer is, for example: natural rubber; or synthetic rubber, such as polyisoprene rubber, styrene/butadiene (SB) rubber, styrene/isoprene (SI) rubber, styrene/isoprene/styrene block copolymer (SIS) rubber, styrene/butadiene/styrene block copolymer (SBS) rubber, styrene/ethylene/butylene/styrene block copolymer (SEBS) rubber, styrene/ethylene/propylene/styrene block copolymer (SEPS) rubber, styrene/ethylene/propylene block copolymer (SEP) rubber, reclaimed rubber, butyl rubber, polyisobutylene, or a modified product thereof.

The pressure-sensitive adhesive A may contain any appropriate additive as required. Examples of the additive include a cross-linking agent, a tackifier, a plasticizer (such as a trimellitic acid ester-based plasticizer or a pyromellitic acid ester-based plasticizer), apigment, adye, afiller, anage resistor, a conductive material, an antistatic agent, a UV absorber, a light stabilizer, a release modifier, a softener, a surfactant, a flame retardant, and an antioxidant.

Any appropriate tackifier is used as the tackifier. For example, a tackifying resin is used as the tackifier. Specific examples of the tackifying resin include a rosin-based tackifying resin (such as unmodified rosin, modified rosin, arosinphenol-based resin, or a rosin ester-based resin), a terpene-based tackifying resin (such as a terpene-based resin, a terpene phenol-based resin, a styrene-modified terpene-based resin, an aromatic modified terpene-based resin, or a hydrogenated terpene-based resin), a hydrocarbon-based tackifying resin (such as an aliphatic hydrocarbon resin, an aliphatic cyclic hydrocarbon resin, an aromatic hydrocarbon resin (e.g., a styrene-based resin or a xylene-based resin), an aliphatic/aromatic petroleum resin, an aliphatic/alicyclic petroleum resin, a hydrogenated hydrocarbon resin, a coumarone-based resin, or a coumarone indene-based resin), a phenol-based tackifying resin (such as an alkylphenol-based resin, a xylene formaldehyde-based resin, resol, or novolac), a ketone-based tackifying resin, a polyamide-based tackifying resin, an epoxy-based tackifying resin, and an elastomer-based tackifying resin. Of those, a rosin-based tackifying resin, a terpene-based tackifying resin, or a hydrocarbon-based tackifying resin (such as a styrene-based resin) is preferred. The tackifiers may be used alone or in combination.

The addition amount of the tackifier is preferably from 5 parts by weight to 100 parts by weight, more preferably from 10 parts by weight to 50 parts by weight with respect to 100 parts by weight of the base polymer.

Examples of the cross-linking agent include an isocyanate-based cross-linking agent, an epoxy-based cross-linking agent, a melamine-based cross-linking agent, and a peroxide-based cross-linking agent as well as a urea-based cross-linking agent, a metal alkoxide-based cross-linking agent, a metal chelate-based cross-linking agent, a metal salt-based cross-linking agent, a carbodiimide-based cross-linking agent, an oxazoline-based cross-linking agent, an aziridine-based cross-linking agent, and an amine-based cross-linking agent. Of those, an isocyanate-based cross-linking agent or an epoxy-based cross-linking agent is preferred.

Specific examples of the isocyanate-based cross-linking agent include: a lower aliphatic polyisocyanate, such as butylene diisocyanate or hexamethylene diisocyanate; an alicyclic isocyanate, such as cyclopentylene diisocyanate, cyclohexylene diisocyanate, or isophorone diisocyanate; an aromatic isocyanate, such as 2,4-tolylene diisocyanate, 4,4'-diphenylmethane diisocyanate, or xylylene diisocyanate; and an isocyanate adduct, such as a trimethylolpropane/tolylene diisocyanate trimer adduct, a trimethylolpropane/hexamethylene diisocyanate trimer adduct, or an isocyanurate form of hexamethylene diisocyanate. The content of the isocyanate-based cross-linking agent may be set to any appropriate amount depending on desired pressure-sensitive adhesive strength, and is typically from 0.1 part by weight to 20 parts by weight, more preferably from 0.5 part by weight to 10 parts by weight with respect to 100 parts by weight of the base polymer.

Examples of the epoxy-based cross-linking agent include N,N,N',N'-tetraglycidyl-m-xylenediamine, diglycidylaniline, 1,3-bis(N,N-glycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, adipic acid diglycidyl ester, o-phthalic acid diglycidyl ester, triglycidyl-tris(2-hydroxyethyl) isocyanurate, resorcin diglycidyl ether, bisphenol-S-diglycidyl ether, and an epoxy-based resin having in its molecule two or more epoxy groups. The content of the epoxy-based cross-linking agent may be set to any appropriate amount depending on desired pressure-sensitive adhesive strength, and is typically from 0.01 part by weight to 10 parts by weight, more preferably from 0.03 part by weight to 5 parts by weight with respect to 100 parts by weight of the base polymer.

### (Thermally Expandable Microspheres)

Any appropriate thermally expandable microspheres may be used as the thermally expandable microspheres as long as the microspheres are capable of expanding or foaming through heating. For example, microspheres each obtained by encapsulating a substance which easily expands through heating in a shell having elasticity may be used as the thermally expandable microspheres. Such thermally expandable microspheres may be manufactured by any appropriate method, such as a coacervation method or an interfacial polymerization method.

Examples of the substance which easily expands through heating include: a low-boiling point liquid, such as propane, propylene, butene, n-butane, isobutane, isopentane, neopentane, n-pentane, n-hexane, isohexane, heptane, octane, petroleum ether, a halomethane, or a tetraalkylsilane; and azodicarbonamide, which is gasified by thermal decomposition.

An example of the constituent substance for the shell is a polymer constituted of : a nitrile monomer, such as acrylonitrile, methacrylonitrile, α-chloroacrylonitrile, α-ethoxyacrylonitrile, or fumaronitrile; a carboxylic acid monomer, such as acrylic acid, methacrylic acid, itaconic acid, maleic acid, fumaric acid, or citraconic acid; vinylidene chloride; vinyl acetate; a (meth) acrylic acid ester, such as methyl (meth)acrylate, ethyl (meth)acrylate, n-butyl (meth)acrylate, isobutyl (meth)acrylate, t-butyl (meth)acrylate, isobornyl (meth)acrylate, cyclohexyl (meth) acrylate, benzyl (meth)acrylate, or β-carboxyethyl acrylate; a styrene monomer, such as styrene, α-methylstyrene, or chlorostyrene; or an amide monomer, such as acrylamide, a substituted acrylamide, methacrylamide, or a substituted methacrylamide. The polymer constituted of such monomer may be a homopolymer, or may be a copolymer. Examples of the copolymer include a vinylidene chloride-methyl methacrylate-acrylonitrile copolymer, a methyl methacrylate-acrylonitrile-methacrylonitrile copolymer, a methyl methacrylate-acrylonitrile copolymer, and an acrylonitrile-methacrylonitrile-itaconic acid copolymer.

An inorganic foaming agent or an organic foaming agent may be used as the thermally expandable microspheres. Examples of the inorganic foaming agent include ammonium carbonate, ammonium hydrogen carbonate, sodium hydrogen carbonate, ammonium nitrite, sodium boron hydroxide, and various azides. In addition, examples of the organic foaming agent include: a chlorofluoroalkane-based compound, such as trichloromonofluoromethane or dichloromonofluoromethane; an azo-based compound, such as azobisisobutyronitrile, azodicarbonamide, or barium azodicarboxylate; a hydrazine-based compound, such as p-toluenesulfonylhydrazide, diphenyl sulfone-3,3'-disulfonylhydrazide, 4,4'-oxybis(benzenesulfonylhydrazide), or allylbis(sulfonylhydrazide); a semicarbazide-based compound, such as p-toluylenesulfonylsemicarbazide or 4,4'-oxybis(benzenesulfonylsemicarbazide); a triazole-based compound, such as 5-morpholyl-1,2,3,4-thiatriazole; and an N-nitroso-based compound, such as N,N'-dinitrosopentamethylenetetramine or N,N'-dimethyl-N,N'-dinitrosoterephthalamide.

Commercially available thermally expandable microspheres may be used as the thermally expandable microspheres. Specific examples of the commercially available thermally expandable microspheres include: products available under the trade name "Matsumoto Microsphere" (grade: F-30, F-30D, F-36D, F-36LV, F-50, F-50D, F-65, F-65D, FN-100SS, FN-100SSD, FN-180SS, FN-180SSD, F-190D, F-260D, and F-2800D) from Matsumoto Yushi-Seiyaku Co., Ltd.; products available under the trade name "Expancel" (grade: 053-40, 031-40, 920-40, 909-80, and 930-120) from Japan Fillite Co. , Ltd.; products available under the trade name "DAIFOAM" (grade: H750, H850, H1100, S2320D, S2640D, M330, M430, and M520) from Kureha Chemical Industry Co. , Ltd. ; and products available under the trade name "ADVANCELL" (grade: EML101, EMH204, EHM301, EHM302, EHM303, EM304, EHM401, EM403, and EM501) from Sekisui Chemical Co., Ltd.

In one embodiment, the particle diameter of each of the thermally expandable microspheres before heating is preferably from 0.5 µm to 80 µm, more preferably from 5 µm to 45 µm, still more preferably from 10 µm to 20 µm, particularly preferably from 10 µm to 15 µm. The particle size of the thermally expandable microspheres before heating in terms of average particle diameter is preferably from 6 µm to 45 µm, more preferably from 15 µm to 35 µm. The thermally expandable microspheres whose particle size falls within such range are excellent in dispersibility. It should be noted that the particle diameters and the average particle diameter are values determined by a particle size distribution measurement method in a laser scattering method.

In another embodiment, the average particle diameter of the thermally expandable microspheres before heating is preferably less than 1 µm, more preferably 0.8 µm or less, still more preferably from 0.3 µm to 0.8 µm. When the particle diameter of the thermally expandable microspheres falls within such range, a pressure-sensitive adhesive sheet having little unevenness in the pressure-sensitive adhesive surface can be obtained. The use of such pressure-sensitive adhesive sheet can prevent unevenness from being caused in the electrolyte membrane serving as an adherend. In addition, the pressure-sensitive adhesive sheet having little unevenness is particularly useful in the manufacture of a membrane electrode assembly involving laminating members such as a gas diffusion electrode through pressure bonding.

It is preferred that the thermally expandable microspheres each have such a moderate strength that rupture does not occur until a volume expansion ratio reaches preferably 5 times or more, more preferably 7 times or more, still more preferably 10 times or more. When such thermally expandable microspheres are used, the pressure-sensitive adhesive strength can be efficiently lowered through heat treatment.

The content of the thermally expandable microspheres in the pressure-sensitive adhesive layer may be appropriately set depending on a desired pressure-sensitive adhesive strength-lowering property and the like. The content of the thermally expandable microspheres is, for example, from 1 part by weight to 150 parts by weight, preferably from 10 parts by weight to 130 parts by weight, more preferably from 25 parts by weight to 100 parts by weight with respect to 100 parts by weight of the base polymer for forming the pressure-sensitive adhesive A.

### C-1-2. Heat-curable Pressure-sensitive Adhesive Layer

The heat-curable pressure-sensitive adhesive layer contains a heat-curable pressure-sensitive adhesive B. The pressure-sensitive adhesive B may be formed of, for example, a thermosetting pressure-sensitive adhesive containing a base polymer and a thermosetting resin, or a thermosetting pressure-sensitive adhesive containing a thermosetting resin as a base polymer. Examples of the thermosetting resin to be used for the pressure-sensitive adhesive B include a phenol-based resin, an amino-based resin, an unsaturated polyester-based resin, an epoxy-based resin, a polyurethane-based resin, a silicone-based resin, and a thermosetting polyimide-based resin. In addition, examples of the base polymer to be used in combination with the thermosetting resin include a (meth)acrylic polymer and a rubber-based polymer.

### C-1-3. Other Pressure-sensitive Adhesive Layer Having Pressure-sensitive Adhesive Strength which Lowers through Heating

Any appropriate pressure-sensitive adhesive layer may be used as the pressure-sensitive adhesive layer having a pressure-sensitive adhesive strength which lowers through heating other than the pressure-sensitive adhesive layers described above as long as the effects of the present invention are obtained. An example of the other pressure-sensitive adhesive layer having a pressure-sensitive adhesive strength which lowers through heating is a pressure-sensitive adhesive layer containing a pressure-sensitive adhesive C and a side chain crystalline polymer.

In the pressure-sensitive adhesive layer containing the pressure-sensitive adhesive C and the side chain crystalline polymer, the content of the side chain crystalline polymer is preferably from 4 parts by weight to 9 parts by weight, more preferably from 4 parts by weight to 6 parts by weight with respect to 100 parts by weight of the pressure-sensitive adhesive C. When the content falls within such range, a pressure-sensitive adhesive layer having a pressure-sensitive adhesive strength which sufficiently lowers through heating can be formed.

It is preferred that the side chain crystalline polymer and the pressure-sensitive adhesive C be non-compatible with each other. When the side chain crystalline polymer and the pressure-sensitive adhesive C are not compatible with each other, a sea-island structure in which the side chain crystalline polymer is dispersed in the pressure-sensitive adhesive C is formed, and a pressure-sensitive adhesive layer having a pressure-sensitive adhesive strength which sufficiently lowers through heating can be formed.

### (Pressure-sensitive Adhesive C)

Any appropriate pressure-sensitive adhesive may be used as the pressure-sensitive adhesive C. Examples of the pressure-sensitive adhesive C include: a natural rubber-based pressure-sensitive adhesive; a synthetic rubber-based pressure-sensitive adhesive; a styrene/butadiene latex-based pressure-sensitive adhesive; block copolymer-type thermoplastic rubber; a butyl rubber-based pressure-sensitive adhesive; a polyisobutylene-based pressure-sensitive adhesive; an acrylic pressure-sensitive adhesive; and a copolymer of vinyl ether. Of those, an acrylic pressure-sensitive adhesive is preferred. The acrylic pressure-sensitive adhesive preferably contains a (meth)acrylic polymer having a constituent unit derived from a C1 to C12 acrylic acid alkyl ester and/or methacrylic acid alkyl ester. The (meth) acrylic polymer may be obtained by polymerizing monomers, such as ethylhexyl (meth)acrylate, hydroxyethyl (meth)acrylate, and methyl (meth)acrylate.

### (Side Chain Crystalline Polymer)

It is preferred that the side chain crystalline polymer can reversibly assume a crystal state and a fluid state depending on temperature. Specifically, it is preferred that the side chain crystalline polymer crystallize at a temperature lower than the melting point of the side chain crystalline polymer and show fluidity at a temperature equal to or higher than the melting point. The use of such side chain crystalline polymer allows the formation of a pressure-sensitive adhesive layer which has a moderate pressure-sensitive adhesive property at a temperature lower than the melting point and, when heated to a temperature equal to or higher than the melting point to fluidize the side chain crystalline polymer, inhibits the pressure-sensitive adhesive property of the pressure-sensitive adhesive C, thereby being able to lower the pressure-sensitive adhesive strength. It should be noted that the term "melting point" as used herein means a temperature at which a specific portion of a polymer aligned in an ordered arrangement is brought into a disordered state through a predetermined equilibriumprocess . Themeltingpoint of the polymer may be obtained through measurement with a differential scanning calorimeter (DSC) under the measurement condition of 10°C/min.

The melting point of the side chain crystalline polymer is preferably 50°C or more, more preferably from 50°C to 70°C.

An example of the side chain crystalline polymer is a polymer obtained by using as its monomer components a (meth) acrylic acid alkyl ester having a C18 or higher (preferably C18 to C22) linear alkyl group, a (meth)acrylic acid alkyl ester having a C6 or lower alkyl group, and a polar monomer.

Examples of the (meth)acrylic acid alkyl ester having a C18 or higher linear alkyl group include stearyl (meth) acrylate, eicosyl (meth)acrylate, and behenyl (meth)acrylate.

The content of the (meth) acrylic acid alkyl ester having a C18 or higher linear alkyl group is preferably from 15 parts by weight to 99 parts by weight, more preferably from 25 parts by weight to 99 parts by weight, still more preferably from 30 parts by weight to 99 parts by weight with respect to 100 parts by weight of the monomer components constituting the side chain crystalline polymer.

Examples of the (meth) acrylic acid alkyl ester having a C6 or lower alkyl group include methyl (meth)acrylate, ethyl (meth)acrylate, butyl (meth)acrylate, and hexyl (meth)acrylate.

The content of the (meth) acrylic acid alkyl ester having a C6 or lower alkyl group is preferably less than 70 parts by weight, more preferably less than 65 parts by weight, still more preferably less than 40 parts by weight with respect to 100 parts by weight of the monomer components constituting the side chain crystalline polymer.

Examples of the polar monomer include: a carboxyl group-containing ethylene unsaturated monomer, such as acrylic acid, methacrylic acid, crotonic acid, itaconic acid, maleic acid, or fumaric acid; and an ethylene unsaturated monomer having a hydroxyl group, such as 2-hydroxyethyl (meth)acrylate, 2-hydroxypropyl (meth)acrylate, or 2-hydroxyhexyl (meth)acrylate.

The content of the polar monomer is preferably from 0.5 part by weight to 25 parts by weight, more preferably from 1 part by weight to 10 parts by weight with respect to 100 parts by weight of the monomer components constituting the side chain crystalline polymer.

The weight-average molecular weight of the side chain crystalline polymer is preferably from 3,000 to 30,000, more preferably from 5, 000 to 25,000. When the weight-average molecular weight falls within such range, a pressure-sensitive adhesive layer having a pressure-sensitive adhesive strength which sufficiently lowers through heating can be formed.

### C-2. Pressure-sensitive Adhesive Layer Having Pressure-sensitive Adhesive Strength which Lowers through Active Energy Ray Irradiation

In one embodiment, the pressure-sensitive adhesive layer has a pressure-sensitive adhesive strength which lowers or disappears through active energy ray irradiation. The pressure-sensitive adhesive layer having a pressure-sensitive adhesive strength which lowers through active energy ray irradiation may contain an active energy ray-curable pressure-sensitive adhesive D which cures when irradiated with an active energy ray. Examples of the active energy ray include a gamma ray, anultraviolet ray, visible light, an infrared ray (heat ray), a radio wave, an alpha ray, a beta ray, an electron ray, a plasma flow, an ionizing ray, and a particle ray.

The thickness of the pressure-sensitive adhesive layer containing the active energy ray-curable pressure-sensitive adhesive D is preferably from 1 µm to 50 µm, more preferably from 5 µm to 30 µm, still more preferably from 5 µm to 20 µm. When the thickness falls within such range, a pressure-sensitive adhesive sheet having a moderate pressure-sensitive adhesive property and being excellent in peelability as well can be obtained.

The initial tensile elastic modulus of the pressure-sensitive adhesive layer containing the active energy ray-curable pressure-sensitive adhesive D at 25°C is preferably 0.01 MPa or more, more preferably from 0.05 MPa to 1.0 MPa, still more preferably from 0.03 MPa to 0.08 MPa. When the initial tensile elastic modulus falls within such range, a pressure-sensitive adhesive sheet having a moderate pressure-sensitive adhesive property, being excellent in handling property at the time of electrolyte membrane conveyance, and being capable of preventing a shift in the position of the electrolyte membrane can be obtained. It should be noted that the initial tensile elastic modulus means the tensile elastic modulus of the pressure-sensitive adhesive layer before an external stimulus (active energy ray irradiation in the case of the pressure-sensitive adhesive layer containing the pressure-sensitive adhesive D) is applied.

The tensile elastic modulus of the pressure-sensitive adhesive layer containing the active energy ray-curable pressure-sensitive adhesive D at 25°C becomes preferably from 10 MPa to 800 MPa, more preferably from 20 MPa to 500 MPa after irradiation with an active energy ray. When the tensile elastic modulus after irradiation with an active energy ray falls within such range, a pressure-sensitive adhesive sheet excellent in workability at the time of peeling can be obtained.

The pressure-sensitive adhesive layer having such physical characteristics (fracture toughness value and elastic modulus) as described above may be obtained by, for example, appropriately selecting a base polymer constituting the pressure-sensitive adhesive, and adjusting the weight-average molecular weight of the base polymer.

Examples of the active energy ray-curable pressure-sensitive adhesive D include: an active energy ray-curable pressure-sensitive adhesive containing a base polymer and an active energy ray-curable monomer and/or oligomer (hereinafter sometimes referred to as "addition-type active energy ray-curable pressure-sensitive adhesive"); and an active energy ray-curable pressure-sensitive adhesive containing as a base polymer a polymer having a polymerizable carbon-carbon double bond (hereinafter sometimes referred to as "base polymer-type active energy ray-curable pressure-sensitive adhesive").

Any appropriate polymer may be adopted as the base polymer contained in the addition-type active energy ray-curable pressure-sensitive adhesive as long as a pressure-sensitive adhesive property can be exhibited. Specific examples of the base polymer include a (meth) acrylic polymer and a rubber-based polymer. Of those, a (meth) acrylic polymer is preferred as the base polymer. An example of the (meth) acrylic polymer is the polymer described in the section C-1-1.

The (meth)acrylic polymer contained in the addition-type active energy ray-curable pressure-sensitive adhesive may have a polymerizable carbon-carbon double bond. The (meth) acrylic polymer which may be used as the base polymer of the base polymer-type active energy ray-curable pressure-sensitive adhesive may be used as the (meth)acrylic polymer having a polymerizable carbon-carbon double bond. The polymer is described later.

The weight-average molecular weight of the (meth) acrylic polymer contained in the addition-type active energy ray-curable pressure-sensitive adhesive is preferably 500,000 or more, more preferably from 800,000 to 3,000,000.

A monomer or oligomer having a functional group which cross-links through active energy ray irradiation, such as a polymerizable carbon-carbon double bond, may be adopted as the active energy ray-curable monomer or oligomer. Examples of the monomer or oligomer having the functional group include trimethylolpropane tri(meth)acrylate, pentaerythritol tri(meth)acrylate, dipentaerythritol hexa(meth)acrylate, tetraethylene glycol di(meth)acrylate, 1,6-hexanediol (meth)acrylate, neopentyl glycol di(meth)acrylate, an esterified product of (meth) acrylic acid and a polyhydric alcohol, an ester acrylate oligomer, 2-propenyl-3-butenyl cyanurate, an isocyanurate, and an isocyanurate compound. Of those, a monomer or oligomer containing 6 or more polymerizable carbon-carbon double bonds per molecule on average, such as dipentaerythritol hexa(meth)acrylate, is preferred. The active energy ray-curable monomers or oligomers may be used alone or in combination. It should be noted that the viscosity of the active energy ray-curable monomer or oligomer is not particularly limited.

The total blending amount of the active energy ray-curable monomer and oligomer in the addition-type active energy ray-curable pressure-sensitive adhesive is preferably from 1 part by weight to 150 parts by weight, more preferably from 1 part by weight to 100 parts by weight, particularly preferably from 5 parts by weight to 50 parts by weight, most preferably from 10 parts by weight to 40 parts by weight with respect to 100 parts by weight of the base polymer. When the blending amount falls within the range, the pressure-sensitive adhesive strength sufficiently lowers through curing.

Meanwhile, in the base polymer-type active energy ray-curable pressure-sensitive adhesive, the base polymer itself has a property of cross-linking through active energy ray irradiation, and hence the addition of the active energy ray-curable monomer or oligomer is not necessarily needed and is optional. In the pressure-sensitive adhesive which does not contain the monomer or oligomer having a low molecular weight, time-dependent migration of such low-molecular-weight component does not occur, and hence a pressure-sensitive adhesive layer having a stable structure can be formed.

A polymer having a polymerizable carbon-carbon double bond in a side chain, in a main chain, or at an end of the main chain may be used as the polymer having a polymerizable carbon-carbon double bond, which serves as the base polymer of the base polymer-type active energy ray-curable pressure-sensitive adhesive. Such polymer is preferably a polymer using as a basic skeleton the (meth) acrylic polymer which may be used as the base polymer in the addition-type active energy ray-curable pressure-sensitive adhesive and having a polymerizable carbon-carbon double bond introduced into the basic skeleton. In consideration of the ease of molecular design, it is preferred that the polymerizable carbon-carbon double bond be introduced into a side chain of the (meth)acrylic polymer.

The number of polymerizable carbon-carbon double bonds per molecule of the polymer having a polymerizable carbon-carbon double bond is preferably 6 or more on average. When the number of polymerizable carbon-carbon double bonds per molecule is 6 or more on average, the pressure-sensitive adhesive sufficiently cures through irradiation with an active energy ray, and thus the pressure-sensitive adhesive strength lowers.

Any appropriate method may be adopted as a method of introducing the polymerizable carbon-carbon double bond into the (meth) acrylic polymer. As a method of introducing the polymerizable carbon-carbon double bond into a side chain of the (meth)acrylic polymer, for example, there is given a method involving copolymerizing a monomer having a functional group to synthesize a (meth) acrylic polymer having the functional group in a side chain, and then subjecting a compound having a functional group capable of reacting with the functional group of the (meth) acrylic polymer and a polymerizable carbon-carbon double bond to a condensation or addition reaction while maintaining the active energy ray-curability of the polymerizable carbon-carbon double bond.

Examples of the combination of the functional groups capable of reacting with each other include: a carboxylic acid group and an epoxy group; a carboxylic acid group and an aziridinyl group; and a hydroxyl group and an isocyanate group. Of those combinations of functional groups, the combination of a hydroxyl group and an isocyanate group is preferred because of the ease of reaction monitoring. As long as the (meth)acrylic polymer having a polymerizable carbon-carbon double bond is obtained with any such combination of functional groups, each functional group may be present on any side of the (meth) acrylic polymer and the compound having a polymerizable carbon-carbon double bond. In the combination of a hydroxyl group and an isocyanate group, it is preferred that the (meth)acrylic polymer have the hydroxyl group and the compound having a polymerizable carbon-carbon double bond have the isocyanate group.

Examples of the isocyanate compound having a polymerizable carbon-carbon double bond include methacryloyl isocyanate, 2-methacryloyloxyethyl isocyanate, and m-isopropenyl-α,α-dimethylbenzyl isocyanate.

Anexampleof the (meth) acrylicpolymerhavingahydroxyl group in a side chain is a polymer obtained by copolymerizing any of the hydroxy group-containing monomers listed above or an ether-based compound, such as 2-hydroxyethyl vinyl ether, 4-hydroxybutyl vinyl ether, diethylene glycol monovinyl ether, or the like.

In the condensation reaction between the isocyanate compound having a polymerizable carbon-carbon double bond and the (meth) acrylic polymer having a hydroxyl group in a side chain, their blending amounts may be set so that the amount of the isocyanate group of the isocyanate compound is preferably from 1 mol to 90 mol, more preferably from 5 mol to 80 mol with respect to 100 mol of the hydroxyl group of the (meth) acrylic polymer. When the ratio between the hydroxyl group and the isocyanate group falls within the range, the condensation reaction efficiently proceeds, and a (meth)acrylic polymer having sufficient active energy ray-curability can be obtained.

The weight-average molecular weight of the polymer having a polymerizable carbon-carbon double bond is preferably 500, 000 ormore, more preferably from about 800, 000 to about 3,000,000. When the weight-average molecular weight is less than 500, 000, there is a risk in that a sufficient cohesive strength is not obtained and an adherend is contaminated.

The base polymer-type active energy ray-curable pressure-sensitive adhesive may contain an active energy ray-curable monomer and/or oligomer as required. The active energy ray-curable monomer and oligomer may be preferably exemplified by the active energy ray-curable monomer and oligomer to be used in the addition-type active energy ray-curable pressure-sensitive adhesive.

The total blending amount of the active energy ray-curable monomer and oligomer in the base polymer-type active energy ray-curable pressure-sensitive adhesive is preferably from 1 part by weight to 150 parts by weight, more preferably from 1 part by weight to 100 parts by weight, particularly preferably from 1 part by weight to 50 parts by weight, most preferably from 5 parts by weight to 40 parts by weight with respect to 100 parts by weight of the base polymer.

The addition-type and base polymer-type active energy ray-curable pressure-sensitive adhesives may each further contain an external cross-linking agent as required. When the base polymer and the external cross-linking agent react with each other in the pressure-sensitive adhesive, the base polymer is cross-linked, and thus its weight-average molecular weight can be increased. Any appropriate cross-linking agent may be adopted as the external cross-linking agent. Specific examples of the external cross-linking agent include a polyisocyanate compound, an epoxy compound, an aziridine compound, a melamine resin, a urea resin, an anhydrous compound, polyamine, and a carboxyl group-containing polymer.

The blending amount of the external cross-linking agent may be appropriately set depending on a balance with the base polymer to be cross-linked, the intended use of the pressure-sensitive adhesive sheet, and the like. The blending amount of the external cross-linking agent is generally from 0.1 part by weight to 10 parts by weight with respect to 100 parts by weight of the base polymer.

The addition-type and base polymer-type active energy ray-curable pressure-sensitive adhesives may each further contain a photopolymerization initiator as required. The photopolymerization initiator is activated by being irradiated with light, such as UV light, and hence may be particularly suitably used when those pressure-sensitive adhesives are UV-curable.

Examples of the photopolymerization initiator include: a benzoin alkyl ether, such as benzoin methyl ether, benzoin propyl ether, benzoin isopropyl ether, or benzoin isobutyl ether; an aromatic ketone, such as benzil, benzoin, benzophenone, or α-hydroxycyclohexyl phenyl ketone; an aromatic ketal, such as benzyl dimethyl ketal; polyvinylbenzophenone; and a thioxanthone, such as chlorothioxanthone, dodecylthioxanthone, dimethylthioxanthone, or diethylthioxanthone.

The blending amount of the photopolymerization initiator is, for example, from 0.1 part by weight to 20 parts by weight, preferably from 0.5 part by weight to 10 parts by weight with respect to 100 parts by weight of the base polymer contained in the pressure-sensitive adhesive.

In addition to the above-mentioned components, the addition-type and base polymer-type active energy ray-curable pressure-sensitive adhesives may each further contain any appropriate additive, such as a tackifier, an age resistor, a filler, or a colorant, as required.

### C-3. Pressure-sensitive Adhesive Layer Having Pressure-sensitive Adhesive Strength which Lowers through Cooling

In one embodiment, the pressure-sensitive adhesive layer has a pressure-sensitive adhesive strength which lowers or disappears through cooling. The pressure-sensitive adhesive layer may contain apressure-sensitive adhesive E having a pressure-sensitive adhesive strength which lowers through cooling. Examples of the pressure-sensitive adhesive E include a natural rubber-based pressure-sensitive adhesive, cis-isoprene rubber, styrene-isoprene rubber, butadiene rubber, a nitrile rubber-based pressure-sensitive adhesive, a chloroprene rubber-based pressure-sensitive adhesive, a chlorosulfonated polyethylene-based pressure-sensitive adhesive, a polysulfide rubber-based pressure-sensitive adhesive, and a butyl rubber-based pressure-sensitive adhesive. The pressure-sensitive adhesive E may contain a tackifier, such as an alkylphenol-formaldehyde-based resin, a coumarone-indene-based resin, or a xylene-formaldehyde-based resin.

In addition, the side chain crystalline polymer described in the section C-1-3 may be used as the pressure-sensitive adhesive E. Through the use of the side chain crystalline polymer alone or the use of the side chain crystalline polymer as a main component, a pressure-sensitive adhesive layer having a pressure-sensitive adhesive strength which lowers through cooling can be formed.

### D. Manufacturing Method for Pressure-sensitive Adhesive Sheet

As a manufacturing method for the pressure-sensitive adhesive sheet for conveying an electrolyte membrane, for example, there are given: (1) a method involving applying a material for forming a pressure-sensitive adhesive layer onto a base material; and (2) a method involving bonding a base material and a pressure-sensitive adhesive film onto each other.

The material for forming a pressure-sensitive adhesive layer contains the above-mentioned pressure-sensitive adhesive (the pressure-sensitive adhesive A, the heat-curable pressure-sensitive adhesive B, the pressure-sensitive adhesive C, the active energy ray-curable pressure-sensitive adhesive D, or the pressure-sensitive adhesive E), and as required, contains the above-mentioned additives and/or any appropriate solvent.

When the thermally expandable microsphere-containing pressure-sensitive adhesive layer is formed, the material for forming a pressure-sensitive adhesive layer may contain the thermally expandable microspheres. In addition, the thermally expandable microsphere-containing pressure-sensitive adhesive layer may be formed by applying the material for forming a pressure-sensitive adhesive layer to form an applied layer, and then embedding the thermally expandable microspheres into the applied layer with a press or the like.

The application of the material for forming a pressure-sensitive adhesive layer may be performed by applying the material for forming a pressure-sensitive adhesive layer by any appropriate method and then drying the applied layer. Any appropriate drying method may be adopted as a method of drying the applied layer. In each of the case where the pressure-sensitive adhesive layer contains the thermally expandable microspheres, and the case where the heat-curable pressure-sensitive adhesive is used, it is preferred the drying be performed at such a temperature that the pressure-sensitive adhesive strength of the pressure-sensitive adhesive does not lower.

In the method involving bonding a base material and a pressure-sensitive adhesive film onto each other, the pressure-sensitive adhesive film may be formed by applying the material for forming a pressure-sensitive adhesive layer onto a release film. The pressure-sensitive adhesive sheet maybe obtained by transferring the pressure-sensitive adhesive film from the release film onto the base material.

### E. Laminate

In one embodiment, there is provided a laminate including the pressure-sensitive adhesive sheet for conveying an electrolyte membrane, and a polymer electrolyte membrane. FIG. 2 is a schematic perspective sectional view of a laminate according to one embodiment of the present invention. It should be noted that, in FIG. 2, the left and right direction in the drawing sheet corresponds to the widthwise direction of the laminate. A laminate 200 of FIG. 2 includes the pressure-sensitive adhesive sheet 100 for conveying an electrolyte membrane, and a polymer electrolyte membrane 10 arranged on the pressure-sensitive adhesive sheet 100 for conveying an electrolyte membrane. The polymer electrolyte membrane 10 is arranged by being bonded onto the pressure-sensitive adhesive layer of the pressure-sensitive adhesive sheet 100. The kindof the polymer electrolyte membrane is not limited, and any appropriate polymer electrolyte membrane may be used. The polymer electrolyte membrane may be anion conductive, or may be proton conductive. The laminate may further include a protective layer for protecting the pressure-sensitive adhesive layer and the polymer electrolyte membrane until actual use. The pressure-sensitive adhesive sheet of the present invention may be taken up into a roll shape in a state of being protected by the protective layer. Examples of the protective layer include a plastic (such as polyethylene terephthalate (PET), polyethylene, or polypropylene) film, a nonwoven fabric, and paper, each of which is subjected to surface coating with a release agent, such as a silicone-based release agent, a fluorine-based release agent, or a long-chain alkyl acrylate-based release agent. In addition, when the pressure-sensitive adhesive sheet is, for example, not protected by the protective layer, its outermost layer on the opposite side to the pressure-sensitive adhesive layer may be subj ected to backside treatment. The backside treatment may be performed, for example, using a release agent, such as a silicone-based release agent or a long-chain alkyl acrylate-based release agent. The backside treatment allows the laminate to be taken up into a roll shape.

It is preferred that the pressure-sensitive adhesive sheet for conveying an electrolyte membrane have an elongate shape, that is, the laminate have an elongate shape. It is more preferred that the laminate have an elongate shape and be formed to be rollable. According to such mode, a laminate suitable for a continuous production process can be provided.

In one embodiment, the polymer electrolyte membrane also has an elongate shape. That is, the polymer electrolyte membrane may be continuously arranged on the pressure-sensitive adhesive sheet for conveying an electrolyte membrane in a length direction. In another embodiment, as illustrated in FIG. 3 (schematic plan view of the laminate), polymer electrolyte membranes 10' are arranged at predetermined intervals on the pressure-sensitive adhesive sheet 100 for conveying an electrolyte membrane. The intervals may be set to any appropriate intervals depending on a desired size of the laminate and the like.

The width of the pressure-sensitive adhesive sheet for conveying an electrolyte membrane may be set to any appropriate width depending on the size of the polymer electrolyte membrane. The width of the polymer electrolyte membrane is preferably from 50% to 100%, more preferably from 70% to 95% with respect to the width of the pressure-sensitive adhesive sheet for conveying an electrolyte membrane.

The thickness of the polymer electrolyte membrane is preferably from 5 µm to 300 µm, more preferably from 10 µm to 100 µm. The pressure-sensitive adhesive sheet of the present invention allows the polymer electrolyte membrane to be conveyed with a good handling property even when the polymer electrolyte membrane is thin.

### F. Manufacturing Method for Fuel-cell Membrane Electrode Assembly

A manufacturing method for fuel-cell membrane electrode assembly of the present invention includes conveying a polymer electrolyte membrane while the polymer electrolyte membrane is arranged on the pressure-sensitive adhesive surface of the pressure-sensitive adhesive sheet for conveying an electrolyte membrane.

### (First Embodiment)

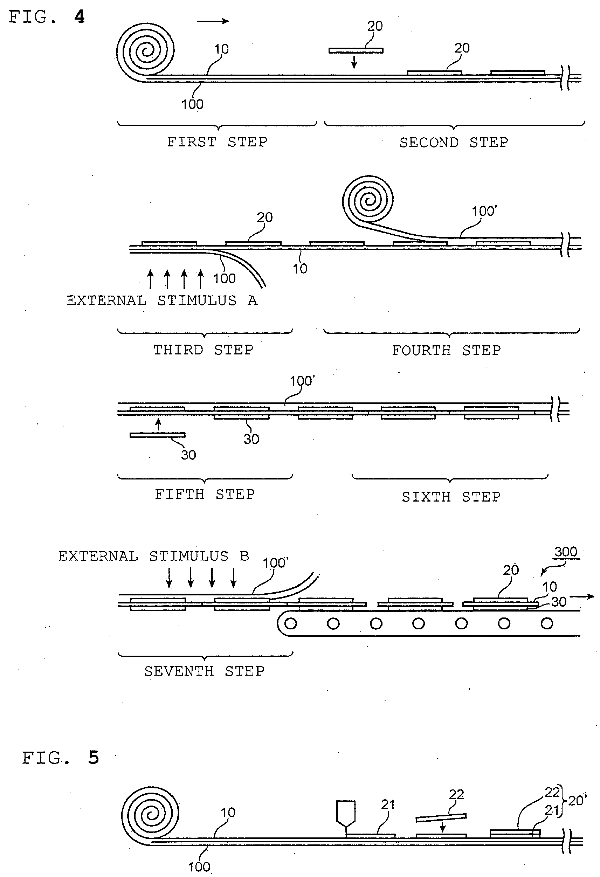

FIG. 4 is an explanatory view of an outline of a manufacturing method for a fuel-cell membrane electrode assembly according to a first embodiment of the present invention. In the first embodiment, a membrane electrode assembly 300 including a first gas diffusion electrode 20, the polymer electrolyte membrane 10, and a second gas diffusion electrode 30 may be manufactured.

It is preferred that, as a first step, the laminate described in the section E, which includes the pressure-sensitive adhesive sheet 100 for conveying an electrolyte membrane and the polymer electrolyte membrane 10 on the pressure-sensitive adhesive sheet 100, be prepared in the form of a roll, and the laminate be fed from the roll.

Next, as a second step, the first gas diffusion electrode 20 is laminated on the surface of the polymer electrolyte membrane 10 on the opposite side to the pressure-sensitive adhesive sheet 100. Any appropriate gas diffusion electrode may be used without any particular limitation as the gas diffusion electrode to be used in the present invention. The gas diffusion electrode typically includes a catalyst layer and a gas diffusion layer. When the polymer electrolyte membranes are arranged at predetermined intervals, the plan view area of the first gas diffusion electrode is, for example, from 60% to 90% with respect to the plan view area of one polymer electrolyte membrane.

Any appropriate method may be adopted as a method of laminating the first gas diffusion electrode **20.**

After the lamination of the first gas dif fusion electrode **20,** as a third step, an external stimulus **A** is applied to the pressure-sensitive adhesive sheet **100** for conveying an electrolyte membrane (substantially the pressure-sensitive adhesive layer of the pressure-sensitive adhesive sheet) to peel off the pressure-sensitive adhesive sheet **100** for conveying an electrolyte membrane.

When heat is used as the external stimulus **A,** heating conditions, such as a temperature and a time, may be set to any appropriate conditions depending on, for example, the characteristics of the thermally expandable microspheres in the pressure-sensitive adhesive layer or the kind of the thermosetting resin constituting the pressure-sensitive adhesive layer. The heating temperature is preferably from 70°C to 200°C, more preferably from 80 °C to 150 °C. When the heating temperature is such temperature, shrinkage of the laminate can be prevented.

When an active energy ray is used as the external stimulus **A,** active energy ray irradiation conditions, such as a wavelength, an irradiation intensity, and an irradiation time, may be set to any appropriate conditions depending on the characteristics of the active energy ray-curable pressure-sensitive adhesive D in the pressure-sensitive adhesive layer.

In addition, after the lamination of the first gas diffusion electrode **20,** another pressure-sensitive adhesive sheet **100'** for conveying an electrolyte membrane is arranged on the side of the polymer electrolyte membrane **10** on which the first gas diffusion electrode **20** has been arranged (fourth step). The timing of the lamination of the other pressure-sensitive adhesive sheet **100'** for conveying an electrolyte membrane may be after the peeling of the pressure-sensitive adhesive sheet **100** for conveying an electrolyte membrane as in the illustrated example, or may be before the peeling of the pressure-sensitive adhesive sheet **100** for conveying an electrolyte membrane. That is, the order of the third step and the fourth step may be reversed. When the other pressure-sensitive adhesive sheet **100'** for conveying an electrolyte membrane is laminated before the peeling of the pressure-sensitive adhesive sheet **100** for conveying an electrolyte membrane, it is preferred that the pressure-sensitive adhesive layer of the pressure-sensitive adhesive sheet **100** for conveying an electrolyte membrane, and the pressure-sensitive adhesive layer of the other pressure-sensitive adhesive sheet **100'** for conveying an electrolyte membrane differ from each other in responsiveness to an external stimulus. When the pressure-sensitive adhesive sheets which differ from each other in responsiveness to an external stimulus are used, each of the pressure-sensitive adhesive sheets can be peeled off at appropriate timing. Specifically, when the two pressure-sensitive adhesive sheets are configured to differ from each other in responsiveness to an external stimulus (more specifically, when the other pressure-sensitive adhesive sheet **100'** for conveying an electrolyte membrane is configured to have a pressure-sensitive adhesive strength which does not lower through the external stimulus **A),** unnecessary peeling of the other pressure-sensitive adhesive sheet **100'** for conveying an electrolyte membrane can be prevented during the peeling of the pressure-sensitive adhesive sheet **100** for conveying an electrolyte membrane. Differing in responsiveness to an external stimulus means, for example: the case where the pressure-sensitive adhesive strengths of the two pressure-sensitive adhesive layers lower through different kinds of external stimuli (e.g., heat/active energy ray); the case where the pressure-sensitive adhesive strengths of both the pressure-sensitive adhesive layers lower through heating, but the pressure-sensitive adhesive strengths are lost at different temperatures; or the case where the pressure-sensitive adhesive strengths of both the pressure-sensitive adhesive layers lower through an active energy ray, but different wavelengths are required for lowering their pressure-sensitive adhesive properties.

After the peeling of the pressure-sensitive adhesive sheet **100** for conveying an electrolyte membrane and the lamination of the other pressure-sensitive adhesive sheet **100'** for conveying an electrolyte membrane, the second gas diffusion electrode **30** is laminated on the surface of the polymer electrolyte membrane **10** on the opposite side to the other pressure-sensitive adhesive sheet **100'** for conveying an electrolyte membrane (fifth step). The second gas diffusion electrode is arranged at a position corresponding to the first gas diffusion electrode. In addition, the second gas diffusion electrode generally has substantially the same size as the first diffusion electrode, but may have a size different from that of the first diffusion electrode. In this step, a plurality of membrane electrode assembly structures each having a construction in which a polymer electrolyte membrane is sandwiched between a pair of gas diffusion electrodes are formed on the pressure-sensitive adhesive surface of the other pressure-sensitive adhesive sheet **100'** for conveying an electrolyte membrane. It should be noted that any appropriate method may be adopted as a method of laminating the second gas diffusion electrode **30.**

When the polymer electrolyte membrane is continuously arranged on the pressure-sensitive adhesive sheet for conveying an electrolyte membrane in its length direction, the manufacturing method of the present invention includes, as a step before separating and cutting the plurality of membrane electrode assembly structures , a step of cutting the polymer electrolyte membrane **10** at a cutting position located between gas diffusion electrodes adjacent in the length direction (sixth step). Any appropriate method may be adopted as a cutting method.

After the cutting of the polymer electrolyte membrane **10,** as a seventh step, an external stimulus **B** is applied to the other pressure-sensitive adhesive sheet **100'** for conveying an electrolyte membrane (substantially the pressure-sensitive adhesive layer of the pressure-sensitive adhesive sheet) to peel off the other pressure-sensitive adhesive sheet **100'** for conveying an electrolyte membrane. Any appropriate conditions may be adopted as conditions for the application of the external stimulus B depending on the construction of the pressure-sensitive adhesive layer.

As described above, the polymer electrolyte membrane **10** is arranged on the pressure-sensitive adhesive surfaces of the pressure-sensitive adhesive sheets **100, 100'** for conveying an electrolyte membrane, and the membrane electrode assembly is manufactured while the polymer electrolyte membrane **10** is conveyed. It is preferred that the resultant membrane electrode assembly be conveyed by a belt conveyor or the like and subjected to the next step.

### (Second Embodiment)

FIG. 5 is an explanatory view of an outline of a manufacturing method for a fuel-cell membrane electrode assembly according to a second embodiment of the present invention. In the second embodiment, a membrane electrode assembly including a first gas diffusion electrode **20',** the polymer electrolyte membrane **10,** and a second gas diffusion electrode in the stated order may be manufactured. In the second embodiment, the first gas diffusion electrode **20'** includes a catalyst layer **21** and a gas diffusion layer **22** in the stated order from the polymer electrolyte membrane **10** side. In addition, the second gas diffusion electrode may also include a catalyst layer and a gas diffusion layer. It should be noted that, in FIG. **5****,** the step of forming the first gas diffusion electrode **20'** and the preceding steps in the manufacturing method for a fuel-cell membrane electrode assembly are illustrated.

Also in this embodiment, as a first step, the laminate described in the section E, which includes the pressure-sensitive adhesive sheet **100** for conveying an electrolyte membrane and the polymer electrolyte membrane **10** on the pressure-sensitive adhesive sheet **100,** is prepared in the form of a roll, and the laminate is fed from the roll.

The catalyst layer **21** is arranged on the surface of the polymer electrolyte membrane **10** on the opposite side to the pressure-sensitive adhesive sheet **100.** Any appropriate method may be adopted as a method of forming the catalyst layer **21.**

In one embodiment, the catalyst layer may be formed through an applying step of, for example, applying a composition for forming a catalyst layer onto the pressure-sensitive adhesive sheet **100,** followed by drying.

A composition containing any appropriate component may be used as the composition for forming a catalyst layer. The composition for forming a catalyst layer contains, for example, conductive particles, such as carbon particles, and a catalyst, such as a platinum catalyst.

As a method of applying the composition for forming a catalyst layer, for example, there is given an application method involving using a bar coater, a spray, screen printing, or the like.

The thickness of the applied layer of the composition for forming a catalyst layer (thickness of the catalyst layer before drying) is preferably from 1 µm to 3,000 µm, more preferably from 30 µm to 1,000 µm.

Any appropriate drying method may be used as a method of drying the applied layer of the composition for forming a catalyst layer. A heating temperature in the case of performing drying by heating is, for example, from 40°C to 200°C, more preferably from 50°C to 150°C.

The thickness of the catalyst layer is preferably from 1 µm to 1,000 µm, more preferably from 10 µm to 300 µm.

The width of the catalyst layer **21** is preferably from 50% to 100%, more preferably from 70% to 95% with respect to the width of the polymer electrolyte membrane **10.** In addition, the plan view area of the catalyst layer may be set to any appropriate area depending on the area of the gas diffusion layer to be laminated on the catalyst layer. The plan view area of the catalyst layer is preferably from 90% to 100%, more preferably from 95% to 100% with respect to the plan view area of the gas diffusion layer. It is particularly preferred that the plan view area of the catalyst layer and the plan view area of the gas diffusion layer be equal to each other.

In another embodiment, the catalyst layer may be formed by transferring a catalyst layer formed on a transfer sheet onto the polymer electrolyte membrane. Any appropriate material may be used as a material constituting the transfer sheet as long as the material allows the catalyst layer to be formed in a satisfactory manner and has a pressure-sensitive adhesive property suitable for the transfer. A sheet constituted of the base material and the pressure-sensitive adhesive layer, that is, a transfer sheet having a pressure-sensitive adhesive property which lowers or disappears through an external stimulus may be used as the transfer sheet.

As a method of forming the catalyst layer on the transfer sheet, for example, there is given a method involving applying the composition for forming a catalyst layer onto the transfer sheet. The application method and the drying method are as described above.

It is preferred that the transfer sheet have an elongate shape. This is because a plurality of catalyst layers can be formed on the transfer sheet having an elongate shape to enable continuous transfer of the catalyst layers. It is preferred that the transfer sheet having an elongate shape and having formed thereon the plurality of catalyst layers be prepared in a roll shape.

The transfer sheet may have one or more holes or marks. The combined use of the transfer sheet having a hole or a mark and the pressure-sensitive adhesive sheet for conveying an electrolyte membrane having a hole or a mark described in the section A facilitates the positioning of the transfer sheet. It should be noted that any appropriate sensor may be used for the positioning of the transfer sheet having a mark.

After the formation of the catalyst layer, the gas diffusion layer **22** is laminated on the surface of the catalyst layer on the opposite side to the polymer electrolyte membrane. Any appropriate gas diffusion layer may be used as the gas diffusion layer. When the polymer electrolyte membranes are arranged at predetermined intervals, the plan view area of the gas diffusion layer is, for example, from 60% to 90% with respect to the plan view area of each of the polymer electrolyte membranes.

Any appropriate method may be adopted as a method of laminating the gas diffusion layer.

In the second embodiment, the membrane electrode assembly may be manufactured in conformity to the manufacturing method described in the first embodiment except that the gas diffusion electrode is formed as described above. It should be noted that the method described for the first diffusion electrode may be adopted as a method of forming the second gas diffusion electrode (catalyst layer and gas diffusion layer). The method of forming the first diffusion electrode and the method of forming the second gas diffusion electrode may be identical to or different from each other.

### Examples

Now, the present invention is specifically described by way of Examples. However, the present invention is by no means limited to these Examples.

### [Example 1]

### (Preparation of Material for Forming Pressure-sensitive Adhesive Layer)

A polymerization experimental apparatus equipped with a 1 L round-bottom separable flask, a separable cover, a separatory funnel, a thermometer, a nitrogen inlet tube, a Liebig condenser, a vacuum seal, a stirring rod, and a stirring blade was loaded with 100 parts by weight of dodecyl methacrylate (manufactured by Kao Corporation, trade name : "EXCEPARL L-MA"), 10.2 parts by weight of 2-hydroxyethyl methacrylate (manufactured by Mitsubishi Rayon Co., Ltd., trade name: "ACRYESTER HO"), 0.22 part by weight of 2,2'-azobis-isobutyronitrile (manufactured by Kishida Chemical Co. , Ltd.) serving as a polymerization initiator, and 55 parts by weight of toluene to prepare a mixture.

While the mixture was stirred, the inside of the round-bottom separable flask was purged with nitrogen under ordinary temperature. After that, while nitrogen was allowed to flow in, the mixture was stirred under a temperature of 60°C±2°C for 12 hours to provide an intermediate composition containing a methacrylic polymer having a functional group (hydroxyl group) in a side chain.

The resultant intermediate composition was cooled to room temperature. After that, the intermediate composition, 9.8 parts by weight of 2-isocyanatoethyl methacrylate (manufactured by Showa DenkoK.K., trade name: "Karenz MOI"), and dibutyltin(IV) dilaurate (manufactured by Wako Pure Chemical Industries, Ltd.) were mixed, and the mixture was stirred under an air atmosphere having a temperature of 50°C for 24 hours to provide a base polymer (polymer having a polymerizable carbon-carbon double bond) solution.

The resultant base polymer solution, 1-hydroxycyclohexyl phenyl ketone (manufactured by Ciba Specialty Chemicals Inc., trade name: "Irgacure 184") serving as a photopolymerization initiator, and a polyisocyanate-based cross-linking agent (manufactured by Nippon Polyurethane Industry Co., Ltd., trade name: "CORONATE L") were mixed and stirred to provide a material for forming a pressure-sensitive adhesive layer containing an active energy ray-curable pressure-sensitive adhesive. It should be noted that the blending amount of 1-hydroxycyclohexyl phenyl ketone was set to 3 parts by weight with respect to 100 parts by weight of the solid content of the base polymer. In addition, the blending amount of the polyisocyanate-based cross-linking agent was set to 3 parts by weight with respect to 100 parts by weight of the solid content of the base polymer.

### (Production of Pressure-sensitive Adhesive Sheet)

An applicator was used to apply the resultant material for forming a pressure-sensitive adhesive layer onto a PET film which had been subjected to silicone-based release treatment. After that, the resultant was dried under 120°C for 5 minutes with a dryer to form a pressure-sensitive adhesive film having a thickness of 10 µm.

A film (thickness: 100 µm) formed of a linear low-density polyethylene resin and having one surface subjected to corona treatment was prepared as a base material.

The pressure-sensitive adhesive film and the corona-treated surface of the base material were bonded onto each other with a hand roller, and the resultant was left to stand under 50°C for 72 hours to provide a pressure-sensitive adhesive sheet A.

### (Evaluation)

The resultant pressure-sensitive adhesive sheet A was cut into a size of 50 mm square, and a polymer electrolyte membrane measuring 20 mmx40 mm (manufactured by DuPont, trade name: "Nafion 212CS") was bonded onto the pressure-sensitive adhesive layer of the pressure-sensitive adhesive sheet A. As a result, it was confirmed that the polymer electrolyte membrane did not peel owing to its own weight.

In addition, the pressure-sensitive adhesive sheet A was irradiated with 450 mJ/cm² of UV light from the base material side thereof. As a result, it was confirmed that its pressure-sensitive adhesive strength lowered and the polymer electrolyte membrane peeled owing to its own weight.

### [Example 2]

A polymerization experimental apparatus equipped with a 1 L round-bottom separable flask, a separable cover, a separatory funnel, a thermometer, a nitrogen inlet tube, a Liebig condenser, a vacuum seal, a stirring rod, and a stirring blade was loaded with 100 parts by weight of dodecyl methacrylate (manufactured by Kao Corporation, trade name: "EXCEPARL L-MA"), 12.6 parts by weight of 2-hydroxyethyl methacrylate (manufactured by Mitsubishi Rayon Co., Ltd., trade name: "ACRYESTER HO"), 0.23 part by weight of 2,2'-azobis-isobutyronitrile (manufactured by Kishida ChemicalCo., Ltd.) serving as a polymerization initiator, and 56 parts by weight of toluene to prepare a mixture.

While the mixture was stirred, the inside of the round-bottom separable flask was purged with nitrogen under ordinary temperature. After that, while nitrogen was allowed to flow in, the mixture was stirred under a temperature of 60°C±2°C for 12 hours to provide an intermediate composition containing a methacrylic polymer having a functional group (hydroxyl group) in a side chain.

The resultant intermediate composition was cooled to room temperature. After that, the intermediate composition, 13.5 parts by weight of 2-isocyanatoethyl methacrylate (manufactured by Showa Denko K.K., trade name: "Karenz MOI"), and dibutyltin (IV) dilaurate (manufactured by Wako Pure Chemical Industries, Ltd.) were mixed, and the mixture was stirred under an air atmosphere having a temperature of 50°C for 24 hours to provide a base polymer (polymer having a polymerizable carbon-carbon double bond) solution.

A pressure-sensitive adhesive sheet B was obtained in the same manner as in Example 1 except that the base polymer solution thus obtained was used.

### (Evaluation)

The resultant pressure-sensitive adhesive sheet B was cut into a size of 50 mm square, and a polymer electrolyte membrane measuring 20 mmx40 mm (manufactured by DuPont, trade name: "Nafion 212CS") was bonded onto the pressure-sensitive adhesive layer of the pressure-sensitive adhesive sheet B. As a result, it was confirmed that the polymer electrolyte membrane did not peel owing to its own weight.

In addition, the pressure-sensitive adhesive sheet B was irradiated with 450 mJ/cm² of UV light from the base material side thereof. As a result, it was confirmed that its pressure-sensitive adhesive strength lowered and the pressure-sensitive adhesive sheet was able to be easily peeled off by hand. It was confirmed that plastic deformation, such as stretching, or a wrinkle did not occur in the polymer electrolyte membrane during the peeling.

### [Reference Example 1]

A pressure-sensitive adhesive sheet A was obtained in the same manner as in Example 1.

### (Evaluation)

A polymer electrolyte membrane was bonded onto the pressure-sensitive adhesive sheet A in the same manner as in Example 1. The polymer electrolyte membrane was peeled off without irradiation with UV light. As a result, the polymer electrolyte membrane underwent plastic deformation, and stretching and a wrinkle occurred.

### [Reference Example 2]

A pressure-sensitive adhesive sheet B was obtained in the same manner as in Example 2.

### (Evaluation)

A polymer electrolyte membrane was bonded onto the pressure-sensitive adhesive sheet B in the same manner as in Example 2. The polymer electrolyte membrane was peeled off without irradiation with UV light. As a result, the polymer electrolyte membrane underwent plastic deformation, and stretching and a wrinkle occurred.

### Reference Signs List

**10** polymer electrolyte membrane
**20** first gas diffusion electrode
**30** second gas diffusion electrode
**100** pressure-sensitive adhesive sheet for conveying electrolyte membrane
**110** base material
**120** pressure-sensitive adhesive layer
**200** laminate
**300** membrane electrode assembly

## Claims

1. A pressure-sensitive adhesive sheet for conveying an electrolyte membrane, comprising:
a base material; and
a pressure-sensitive adhesive layer arranged on one surface or each of both surfaces of the base material,
wherein the pressure-sensitive adhesive layer has a pressure-sensitive adhesive strength which lowers or disappears through an external stimulus.

2. The pressure-sensitive adhesive sheet for conveying an electrolyte membrane according to claim 1, wherein the pressure-sensitive adhesive layer contains thermally expandable microspheres.

3. The pressure-sensitive adhesive sheet for conveying an electrolyte membrane according to claim 1, wherein the pressure-sensitive adhesive layer is configured to cure through active energy ray irradiation.

4. A manufacturing method for a fuel-cell membrane electrode assembly using the pressure-sensitive adhesive sheet for conveying an electrolyte membrane of any one of claims 1 to 3 , the manufacturing method comprising conveying a polymer electrolyte membrane while the polymer electrolyte membrane is arranged on a pressure-sensitive adhesive surface of the pressure-sensitive adhesive sheet for conveying an electrolyte membrane.

5. The manufacturing method for a fuel-cell membrane electrode assembly according to claim 4, wherein the pressure-sensitive adhesive sheet for conveying an electrolyte membrane has an elongate shape.

6. A laminate, comprising:
the pressure-sensitive adhesive sheet for conveying an electrolyte membrane of any one of claims 1 to 3; and
a polymer electrolyte membrane arranged on the pressure-sensitive adhesive layer of the pressure-sensitive adhesive sheet for conveying an electrolyte membrane.

7. The laminate according to claim 6, wherein the pressure-sensitive adhesive sheet for conveying an electrolyte membrane has an elongate shape.

8. The laminate according to claim 7, wherein the polymer electrolyte membrane has an elongate shape.

9. The laminate according to any one of claims 6 to 8, wherein the laminate is formed to be rollable.
